# EUROPÄISCHE PATENTSCHRIFT

(11) **EP 2 597 748 B1**
(45) Veröffentlichungstag und Bekanntmachung des Hinweises auf die Patenterteilung: **08.08.2018**
(21) Anmeldenummer: 12193844.3
(22) Anmeldetag: 22.11.2012
(51) Int. Cl.: H02J 50/12, H01F 38/14

(54) **Ladeschaltung für einen Energiespeicher eines portablen elektrischen Geräts**
Charging circuit for an energy storage device of a portable electric device
Commutation de charge pour un accumulateur d'énergie d'un appareil électrique portable

(30) Priorität: 22.11.2011 DE 102011086849
(43) Veröffentlichungstag der Anmeldung: 29.05.2013
(73) Patentinhaber: Funkwerk Dabendorf GmbH, 15806 Dabendorf (DE)
(72) Erfinder: Kohlschmidt, Peter, 86706 Weichering (DE); Scholz, Frank, 13505 Berlin (DE); Jung, Peter, Dr., 67697 Otterberg (DE); Bruck, Guido, Dr., 46562 Voerde (DE)
(74) Vertreter: Brunotte, Joachim Wilhelm Eberhard

(56) Entgegenhaltungen:
- JP-A- 2011 229 360
- JP-A- 2011 234 566
- US-A1- 2008 298 100
- US-A1- 2009 079 271

## Beschreibung

Die Erfindung betrifft eine Ladeschaltung für einen Energiespeicher eines portablen elektrischen Geräts. Die Erfindung betrifft ferner ein portables elektrisches Gerät mit einer solchen Ladeschaltung und einer Anordnung zum Laden eines Energiespeichers eines portablen elektrischen Geräts, ein Verfahren zum Laden eines Energiespeichers eines portablen elektrischen Geräts und ein Verfahren zum Herstellen einer Ladeschaltung für einen Energiespeicher eines portablen elektrischen Geräts.

Portable elektrische Geräte, z. B. Mobiltelefone, PDAs (Personal Digital Assistants), Audio- und Video-Wiedergabegeräte, Fotoapparate, am Kopf tragbare Lautsprecher und Mikrofoneinheiten (sogenannte Head Sets), Taschenlampen, Zahnbürsten und Kaffeetassen mit integrierter Heizung, um nur einige zu nennen, besitzen einen Energiespeicher zur Versorgung des elektrischen Geräts mit elektrischer Energie. Andernfalls könnte das Gerät nicht oder nur unter permanenter Zufuhr von Energie von außen betrieben werden. Zum Laden des Energiespeichers wird traditionell eine Kabelverbindung zu dem Energiespeicher hergestellt und fließt ein Ladestrom durch das Kabel. Es sind jedoch auch kabellose Ladesysteme bekannt, bei deren Betrieb ein magnetisches Wechselfeld von einer primärseitigen Sendeschaltung erzeugt wird und das magnetische Wechselfeld von einer sekundärseitigen Empfangsschaltung des elektrischen Geräts empfangen und von dieser in eine elektrische Spannung umgewandelt wird.

Z. B. beschreibt US 2009/0096413 A1 eine primärseitige Ladeeinrichtung mit einer Energiequelle und einem Schalter, der bei einer entsprechenden Frequenz geschaltet wird, um über eine primärseitige Wicklung eine Wechselspannung zu erzeugen, die ein magnetisches Wechselfeld erzeugt. Der zugehörige Empfänger weist eine sekundärseitige Wicklung auf, in der eine Spannung erzeugt wird, die gleichgerichtet und durch eine Kapazität geglättet wird, um eine Last mit Leistung zu versorgen.

DE 10 2009 033 751 A1 beschreibt eine Anordnung zur drahtlosen Ankopplung eines elektronischen Gerätes mit Funkverbindung an Einrichtungen eines Kraftfahrzeugs. Nach Auflegen des elektronischen Geräts auf eine Auflagefläche wird das Gerät über eine Funkverbindung angekoppelt. Ferner weist die Anordnung eine primärseitige Antenne zur Erzeugung elektromagnetischer Wellen auf, die von einer sekundärseitigen Antenne des elektronischen Geräts empfangen und zur Ladung eines Energiespeichers des elektronischen Geräts benutzt wird.

Wenn wie in der US 2009/0096413 A1 beschrieben ein Schalter der primärseitigen Sendeschaltung mit einer geeigneten Frequenz ein- und ausgeschaltet wird, entsteht ein magnetisches Wechselfeld, das abhängig von der Induktivität der primärseitigen Spule bzw. Antenne mehr oder weniger dem rechteckförmigen zeitlichen Schaltverlauf des Schalters folgt. Um die Energie bzw. Leistung möglichst effektiv auf die Sekundärseite, d. h. zu dem elektrischen Gerät zu übertragen, soll die Frequenz des magnetischen Wechselfeldes gleich einer Resonanzfrequenz der sekundärseitigen Empfangsschaltung sein. Durch Überlegungen und Versuche der Erfinder hat sich jedoch herausgestellt, dass selbst bei einem Ein- und Ausschalten des primärseitigen Schalters mit der Resonanzfrequenz der sekundärseitigen Empfangsschaltung ein erheblicher Teil der Energie des magnetischen Wechselfeldes nicht von der Empfangsschaltung in elektrische Energie umgewandelt wird.

JP 2011-234566 A beschreibt ein kontaktloses Leistungsübertragungssystem mit einer Gruppe von Sendeantennen und einer Gruppe von Empfangsantennen, wobei eine Basisantenne der Gruppe von Sendeantennen und eine Basisantenne der Gruppe von Empfangsantennen dieselbe Grund-Resonanzfrequenz haben und elektromagnetisch miteinander kombiniert sind. Auf der Empfangsseite gibt es Antennen mit einer Resonanzfrequenz, die ein ganzzahliges Vielfaches der Basis-Resonanzfrequenz betragen und die jeweils mit einer Antenne der Gruppe von Sendeantennen elektromagnetisch gekoppelt sind, welche dieselbe Resonanzfrequenz hat.

JP 2011-229360 A beschreibt eine kontaktlose Leistungsübertragungseinrichtung, die resonante Leistungsübertragungsmittel und resonante Leistungsempfangsmittel aufweist, die magnetisch miteinander gekoppelt sind. Eines der resonanten Mittel ist auf eine vorgegebene einzelne Resonanzfrequenz gesetzt und das andere resonante Mittel ist auf eine Mehrzahl von Resonanzfrequenzen gesetzt.

US 2008/0298100 A1 beschreibt eine kontaktlose Leistungsempfangseinheit mit mehreren Leistungsempfangsspulen, die derart angeordnet sind, dass sie bestimmte relative Winkel zueinander aufweisen, und zwar in einem parallelen magnetischen Feld, das von einer Leistungsversorgungseinheit erzeugt wird.

US 2009/0079271 A1 beschreibt eine Leistungsübertragungs-Steuereinrichtung zur Verwendung für ein kontaktloses Leistungsübertragungssystem. In einer Ausgestaltung können zwei resonante Schaltkreise gebildet sein, von denen einer eine Resonanzfrequenz entsprechend einer ungeradzahligen Oberwelle der Steuerfrequenz eines Steuersignals der Primärspule hat.

Es ist eine Aufgabe der vorliegenden Erfindung, die Effektivität der Übertragung von Energie mittels Induktion aufgrund eines magnetischen Wechselfeldes zu verbessern. Insbesondere sollen eine entsprechende Ladeschaltung, ein portables elektrisches Gerät, eine Anordnung zum Laden eines Energiespeichers eines portablen elektrischen Geräts, ein Verfahren zum Laden eines Energiespeichers eines portablen elektrischen Geräts und ein Verfahren zum Herstellen einer Ladeschaltung für einen Energiespeicher angegeben werden, mit denen eine effektive Übertragung von Energie mittels eines magnetischen Wechselfeldes möglich ist.

Die Erfindung geht von der Erkenntnis aus, dass die primärseitige Sendeschaltung ähnlich wie es die US 2009/0096413 A1 beschreibt, auf einfache Weise durch Ein- und Ausschalten des Schalters bei konstanter Schaltfrequenz betrieben werden können. Unter konstanter Schaltfrequenz ist dabei zu verstehen, dass die Schaltfrequenz über längere Betriebsphasen hinweg konstant oder annähernd konstant ist. Dies schließt aber nicht aus, dass insbesondere zum Anfang des Sendebetriebes eine Anpassung der Schaltfrequenz an die Resonanzfrequenz der Sekundärseite vorgenommen wird. Ein solcher Betrieb mit konstanter Schaltfrequenz ist aber erheblich weniger aufwendig als ein Betrieb mit veränderlichen Einschaltzeiten, um einen annähernd sinusförmigen Verlauf der magnetischen Feldstärke des Wechselfeldes zu erzielen. Im Gegensatz dazu schlägt die Erfindung vor, die zumindest einer Oberwelle des magnetischen Wechselfeldes zugeordnete Energie auf der Empfängerseite (Sekundärseite) ebenfalls zu nutzen und in elektrische Energie umzuwandeln.

Es wird daher vorgeschlagen, auf der Empfängerseite, d. h. auf der Seite des elektrischen Gerätes, zumindest zwei Empfangs-Spulen vorzusehen und für die Umwandlung der magnetischen Feldenergie in elektrische Energie zu nutzen. Jede der Empfangs-Spulen bildet mit jeweils zumindest einem weiteren elektrischen Bauteil einen Resonanz-Schaltkreis, wobei die Resonanzfrequenz eines ersten der Resonanz-Schaltkreise insbesondere auf die Schaltfrequenz der primärseitigen Sendeschaltung abgestimmt wird (oder umgekehrt die Schaltfrequenz der Sendeseite auf die Resonanzfrequenz des ersten Resonanz-Schaltkreise abgestimmt wird) und wobei die Resonanzfrequenz des zweiten Resonanz-Schaltkreises ein ganzzahliges Vielfaches der Resonanzfrequenz des ersten Resonanz-Schaltkreises beträgt. Im Fall eines beispielsweise nahezu rechteckförmigen Verlaufs der magnetischen Feldstärke mit konstanter Wechselfrequenz beträgt die Resonanzfrequenz des zweiten Resonanz-Schaltkreises vorzugsweise das Dreifache der Resonanzfrequenz des ersten Resonanz-Schaltkreises. Wird in diesem Fall noch ein dritter Resonanz-Schaltkreis auf der Empfängerseite eingesetzt, beträgt dessen Resonanzfrequenz vorzugsweise das Fünffache der Resonanzfrequenz des ersten Resonanz-Schaltkreises. Dem liegt die Erkenntnis zugrunde, dass bei dem genannten rechteckförmigen Verlauf der magnetischen Feldstärke die magnetische Feldenergie einerseits der Grundwelle (d. h. der Frequenz des rechteckförmigen Feldstärkenverlaufs) und andererseits ausschließlich den ungeradzahligen ganzzahligen Vielfachen der Grundfrequenz, d. h. den geradzahligen Oberwellen zuzuordnen ist.

Insbesondere wird vorgeschlagen: Eine Ladeschaltung für einen Energiespeicher eines portablen elektrischen Geräts, aufweisend einen ersten Resonanz-Schaltkreis, mit
- einer ersten Empfangs-Spule zum Empfangen eines magnetischen Wechselfeldes, das in der ersten Empfangs-Spule eine elektrische Spannung induziert, und
- zumindest einem weiteren elektrischen Bauteil, welches mit zumindest einem Anschluss der ersten Empfangs-Spule verbunden ist,
   wobei die erste Empfangs-Spule und das zumindest eine weitere elektrische Bauteil mit ihren Impedanzen eine Resonanzfrequenz des ersten Resonanz-Schaltkreises festlegen. Es ist zumindest ein zweiter Resonanz-Schaltkreis vorgesehen, mit
- einer zweiten Empfangs-Spule zum Empfangen eines magnetischen Wechselfeldes, das in der zweiten Empfangs-Spule eine elektrische Spannung induziert, und
- zumindest einem weiteren elektrischen Bauteil, welches mit zumindest einem Anschluss der zweiten Empfangs-Spule verbunden ist,
wobei die zweite Empfangs-Spule und das zumindest eine weitere elektrische Bauteil mit ihren Impedanzen eine Resonanzfrequenz des zweiten Resonanz-Schaltkreises festlegen, wobei die Resonanzfrequenz des zweiten Resonanz-Schaltkreises ein ganzzahliges Vielfaches der Resonanzfrequenz des ersten Resonanz-Schaltkreises beträgt und wobei die Empfangs-Spulen der Resonanz-Schaltkreise derart angeordnet sind, dass sie bei Betrieb der Ladeschaltung von denselben Magnetfeldlinien des magnetischen Wechselfeldes durchsetzt sind.

Ein entsprechendes Verfahren zum Laden eines Energiespeichers eines portablen elektrischen Geräts weist Folgendes auf:
- Empfangen eines magnetischen Wechselfeldes und Induzieren einer elektrischen Spannung durch eine erste Empfangs-Spule, wobei eine Resonanzfrequenz beim Induzieren der elektrischen Spannung durch die Impedanzen der ersten Empfangs-Spule und zumindest eines weiteren elektrischen Bauteils, die gemeinsam einen ersten Resonanz-Schaltkreises bilden, festgelegt wird,
- Empfangen desselben magnetischen Wechselfeldes und Induzieren einer elektrischen Spannung durch eine zweite Empfangs-Spule, wobei eine Resonanzfrequenz beim Induzieren der elektrischen Spannung durch die Impedanzen der zweiten Empfangs-Spule und zumindest eines weiteren elektrischen Bauteils, die gemeinsam einen zweiten Resonanz-Schaltkreises bilden, festgelegt wird,
wobei die Resonanzfrequenz des zweiten Resonanz-Schaltkreises auf ein ganzzahliges Vielfaches der Resonanzfrequenz des ersten Resonanz-Schaltkreises festgelegt wird und wobei die Empfangs-Spulen der Resonanz-Schaltkreise derart angeordnet werden, dass sie bei Betrieb der Ladeschaltung von denselben Magnetfeldlinien des magnetischen Wechselfeldes durchsetzt sind.

Ein entsprechendes Verfahren zum Herstellen einer Ladeschaltung für einen Energiespeicher eines portablen elektrischen Geräts, weist folgende Schritte auf:
- Bilden eines ersten Resonanz-Schaltkreises, mit einer ersten Empfangs-Spule zum Empfangen eines magnetischen Wechselfeldes, das in der ersten Empfangs-Spule eine elektrische Spannung induziert, und mit zumindest einem weiteren elektrischen Bauteil, welches mit zumindest einem Anschluss der ersten Empfangs-Spule verbunden wird, wobei durch Festlegen der Impedanzen der ersten Empfangs-Spule und des zumindest einen weiteren elektrischen Bauteils eine Resonanzfrequenz des ersten Resonanz-Schaltkreises festgelegt wird,
- Bilden eines zweiten Resonanz-Schaltkreises, mit einer zweiten Empfangs-Spule zum Empfangen eines magnetischen Wechselfeldes, das in der zweiten Empfangs-Spule eine elektrische Spannung induziert, und mit zumindest einem weiteren elektrischen Bauteil, welches mit zumindest einem Anschluss der zweiten Empfangs-Spule verbunden wird, wobei durch Festlegen der Impedanzen der zweiten Empfangs-Spule und des zumindest einen weiteren elektrischen Bauteils eine Resonanzfrequenz des zweiten Resonanz-Schaltkreises festgelegt wird,
wobei die Resonanzfrequenz des zweiten Resonanz-Schaltkreises auf ein ganzzahliges Vielfaches der Resonanzfrequenz des ersten Resonanz-Schaltkreises festgelegt wird und wobei die Empfangs-Spulen der Resonanz-Schaltkreise derart angeordnet werden, dass sie bei Betrieb der Ladeschaltung von denselben Magnetfeldlinien des magnetischen Wechselfeldes durchsetzt sind.

Insbesondere werden die zumindest zwei Empfangs-Spulen derart angeordnet bzw. sind derart angeordnet, dass sie nicht nur von denselben Magnetfeldlinien des elektrischen Feldes durchsetzt sind, sondern auch bei derselben Flussdichte des magnetischen Flusses. Insbesondere können daher zumindest zwei der Empfangs-Spulen jeweils zumindest eine Wicklung einer elektrischen Leitung aufweisen, wobei die elektrischen Leitungen der zumindest zwei Empfangs-Spulen parallel zueinander verlaufen und von einem gemeinsamen Träger getragen werden. Vorzugsweise verlaufen die elektrischen Leitungen der zumindest zwei Empfangs-Spulen dabei nicht nur parallel zueinander, sondern aneinander anliegend. Der gemeinsame Träger ist z. B. ein gemeinsames Gehäuse und/oder eine gemeinsame Platine, wie sie z. B. für das Tragen von elektrischen Schaltungen allgemein bekannt ist.

Ebenfalls zu dem Zweck, in den verschiedenen Empfangs-Spulen dieselben magnetischen Feldlinien bei derselben Flussdichte zu empfangen, wird in konkreter Ausgestaltung vorgeschlagen, dass zumindest zwei der Empfangs-Spulen jeweils zumindest eine Wicklung einer elektrischen Leitung aufweisen, wobei die elektrische Leitung zumindest einer der Empfangs-Spulen im gesamten Verlauf der Windungen ihrer Wicklung parallel zu der elektrischen Leitung der anderen Empfangs-Spule oder zumindest einer der anderen Empfangs-Spulen verläuft. Auch dabei liegen die parallel zueinander verlaufenden elektrischen Leitungen vorzugsweise aneinander an (d. h. es ist kein Zwischenraum zwischen den parallel verlaufenden Leitungen vorhanden). Generell gilt selbstverständlich, dass einander berührende oder nahe beieinander angeordnete parallele Leitungen elektrisch gegeneinander isoliert sind (z. B. lackierte Kupferdrähte oder -litzen oder durch zusätzliches Isoliermaterial zwischen den Leitungen).

In besonderer Ausgestaltung können die elektrischen Leitungen von zumindest zwei der Empfangs-Spulen eine gemeinsame spiralförmige Wicklung bilden, wobei die elektrischen Leitungen nebeneinander in einer Wicklungsebene der spiralförmigen Wicklung verlaufen. Eine solche Ausgestaltung ist besonders flach bezüglich der Richtung senkrecht zur Wicklungsebene.

Bei einer Weiterbildung, die frei von störenden Einflüssen aufgrund von Leitungsabschnitten ist, die quer zu den spiralförmig verlaufenden Leitungsabschnitten verlaufen, bilden die elektrischen Leitungen zwei spiralförmige Wicklungen, wobei die im Inneren der beiden spiralförmigen Wicklungen angeordneten Abschnitte der elektrischen Leitungen miteinander verbunden sind, sodass eine Serienschaltung der beiden spiralförmigen Wicklungen an den Außenseiten der spiralförmigen Wicklungen elektrisch an weitere Elemente des jeweiligen Resonanz-Schaltkreises angeschlossen sind. Insbesondere sind die beiden spiralförmigen Wicklungen bezüglich einer Achse durch das Zentrum der Spirale koaxial angeordnet. Vorzugsweise liegen die beiden spiralförmigen Wicklungen unmittelbar übereinander, wobei vorzugsweise kein Zwischenraum zwischen den beiden Wicklungen besteht. Alternativ können die Wicklungen z. B. an den gegenüberliegenden Oberflächen eines plattenförmigen Trägers (z. B. einer Platine) anliegen.

Ähnlich wie an sich für einen einzigen Resonanz-Schaltkreis bereits bekannt ist, ist z. B. an jedem der Resonanz-Schaltkreise ein Gleichrichter angeschlossen. Diese mehreren Gleichrichter können in Reihe und/oder parallel zueinander geschaltet sein, je nach gewünschtem Ladestrom während des Betriebes der Ladeschaltung. Im Vergleich zu der aus dem Stand der Technik bekannten Lösung mit lediglich einer Empfangs-Spule kann daher entweder der Ladestrom oder die Ladespannung auf der Sekundärseite erhöht werden. Selbstverständlich kann bei der Verwendung von mehr als zwei Resonanz-Schaltkreisen auch sowohl der Ladestrom als auch die Ladespannung erhöht werden. In diesem Fall sind Gleichrichter sowohl parallel als auch in Reihe geschaltet.

Weiterbildungen und Ausgestaltungen des Verfahrens zum Laden eines Energiespeichers eines portablen elektrischen Geräts und des Verfahrens zum Herstellen einer Ladeschaltung für einen Energiespeicher eines portablen elektrischen Geräts wurden teilweise bereits explizit erwähnt oder folgen aus entsprechenden Ausgestaltungen der Ladeschaltung.

Zumindest die Empfangs-Spulen der Ladeschaltung können in eine Gehäuse-Außenwand, z. B. in einen Gehäusedeckel des portablen elektrischen Gerätes integriert sein, insbesondere derart, dass die Wicklungen der Empfangs-Spulen entlang der Oberfläche des Gehäuses verlaufen. Alternativ kann zumindest eine der Empfangs-Spulen innenseitig der Gehäusewand an der Innenoberfläche der Außenwand anliegend angeordnet sein. Gemäß einer alternativen oder zusätzlichen Ausgestaltung ist zumindest eine der Empfangs-Spulen an dem Energiespeicher befestigt, der z. B. im Fall von Mobiltelefonen oder PDAs häufig quaderförmig ausgestaltet ist. Auch die weiteren elektrischen Bauelemente der Ladeschaltung sind vorzugsweise am Gehäusedeckel des Geräts und/oder am oder im Energiespeicher befestigt.

Insbesondere können die mehreren Empfangs-Spulen mit einem oder mehreren Flussführungsteilen zur Führung des magnetischen Flusses des magnetischen Wechselfeldes kombiniert sein. Ein übliches Material zur Flussführung ist Ferrit. Grundsätzlich können jedoch auch andere Materialien verwendet werden, wie z. B. das früher übliche Eisen. Z. B. umlaufen die Wicklungen von mehreren der Empfangs-Spulen ein gemeinsames Flussführungsteil. Dies gewährleistet, dass die mehreren Empfangs-Spulen von denselben Feldlinien des magnetischen Wechselfeldes durchsetzt werden. Ferner gewährleistet ein Flussführungsteil in hohem Maße eine Homogenität der magnetischen Feldstärke.

Zum Umfang der Erfindung gehört ferner ein portables elektrisches Gerät, wobei das Gerät die Ladeschaltung entsprechend einer der Ausgestaltungen aufweist und ferner einen Energiespeicher aufweist, wobei der Energiespeicher elektrisch mit der Ladeschaltung verbunden ist, sodass bei Empfang eines magnetischen Wechselfeldes durch die Empfangs-Spulen die in den Empfangs-Spulen induzierte elektrische Spannung einen Ladestrom erzeugt, der den Energiespeicher lädt.

Weiterhin gehört zum Umfang der Erfindung eine Anordnung zum Laden eines Energiespeichers eines portablen elektrischen Geräts, die die Ladeschaltung oder das portable elektrische Gerät in einer der beschriebenen Ausgestaltungen aufweist und ferner eine Erzeugungsschaltung zum Erzeugen des magnetischen Wechselfeldes aufweist. Diese Erzeugungsschaltung ist die primärseitige Sendeschaltung.

Ausführungsbeispiele werden nun unter Bezugnahme auf die beigefügte Zeichnung beschrieben. Die einzelnen Figuren der Zeichnung zeigen:
- Fig. 1: einen Abschnitt eines Mobiltelefons, wobei der oben liegende Gehäusedeckel, unter dem sich ein aufladbarer Energiespeicher befindet, einen nach oben vorspringenden kegelstumpfförmigen Vorsprung hat,
- Fig. 2: das Mobiltelefon gemäß Fig. 1, wobei die Seite mit dem Vorsprung nach unten gerichtet ist und der Vorsprung in eine entsprechend geformte kegelstumpfförmige Aussparung einer Anordnung zur Ankopplung des Mobiltelefons an Einrichtungen eines Kraftfahrzeugs hineinragt, wobei das Mobiltelefon auf eine Auflagefläche der Anordnung aufgelegt ist,
- Fig. 3: eine Draufsicht auf die Anordnung gemäß Fig. 2, die das in einer bestimmten Drehposition relativ zu der Rotationsachse der kegelstumpfförmigen Aussparung ausgerichtete Mobiltelefon auf der Auflagefläche zeigt.
- Fig. 4: schematisch eine Anordnung mit einer primärseitigen Sendeschaltung zur Erzeugung des magnetischen Wechselfeldes und mit einer sekundärseitigen Empfangs- und Ladeschaltung zum Laden eines Energiespeichers,
- Fig. 5: Schaltungsanordnungen der Sendeseite und der Empfangsseite einer Anordnung zur drahtlosen Ladung eines Energiespeichers,
- Fig. 6: eine Schaltungsanordnung ähnlich der in Fig. 5, wobei jedoch auf der Sekundärseite (Empfangsseite) die Gleichrichter in Serie statt parallel zueinander geschaltet sind,
- Fig. 7: in vergrößerter Darstellung die in Fig. 5 und Fig. 6 bereits dargestellte Schaltungsanordnung auf der Primärseite (Sendeseite),
- Fig. 8: eine alternative Schaltungsanordnung der Sendeseite, die z. B. statt der in Fig. 7 dargestellten Schaltungsanordnung bei den in Fig. 5 und Fig. 6 dargestellten Anordnungen Verwendung finden kann,
- Fig. 9: eine Anordnung mit drei übereinander gestapelten Empfangs-Spulen,
- Fig. 10: eine Spulenanordnung mit drei Empfangs-Spulen, deren Windungen zu einer einzigen, gemeinsamen Spiralwicklung gewickelt sind,
- Fig. 11: ein rechteckförmiger Verlauf konstanter Frequenz der Spannung an einer primärseitigen Sende-Spule zur Erzeugung eines magnetischen Wechselfeldes und
- Fig. 12: als Balkendiagramm die Energieanteile eines rechteckförmigen, dem Spannungsverlauf in Fig. 11 entsprechenden magnetischen Wechselfeldes unter der Annahme, dass die Induktivität der Sende-Spule keine wesentliche Glättung des rechteckförmigen Verlaufs bewirkt, wobei die Energieanteile der Grundwelle und den Oberwellen der Grundwelle zugeordnet sind.

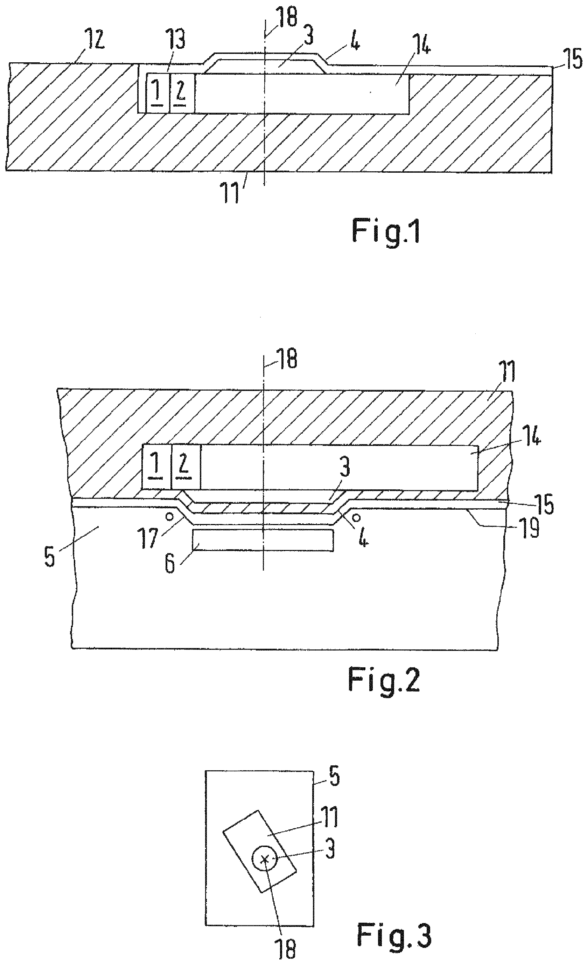

In den Fig. 1 bis 3 wird ein spezielles Ausführungsbeispiel für ein mobiles elektrisches Gerät und eine Anordnung zum Laden eines Energiespeichers des Gerätes beschrieben. Auch wenn ein Mobiltelefon (und alternativ auch ein anderes Kommunikationsgerät, das nicht über ein zelluläres Mobilfunknetz, sondern z. B. lediglich über WLAN- oder Bluetooth-Verbindungen kommunizieren kann) ein bevorzugter Anwendungsfall für die vorliegende Erfindung ist, wird dadurch der Schutz nicht auf Mobiltelefone oder auf die speziellen mechanischen Ausgestaltungen der Anordnung in Fig. 1 bis Fig. 3 beschränkt. Auch können einzelne Merkmale des Beispiels bei anderen Ausführungsformen weggelassen werden (z. B. der kegelstumpfförmige Vorsprung) und/oder kann die Ausführungsform zusätzliche Merkmale aufweisen. Daher kann ein Mobiltelefon z. B. eben, ohne Vorsprung auf seinem Untergrund aufliegen und/oder durch form- und oder kraftschlüssige Haltemittel in einer optimalen Position und/oder Ausrichtung relativ zur primärseitigen Sendeschaltung gehalten werden.

Der Vertikalschnitt durch einen Teil eines Mobiltelefons 11, der in Fig. 1 gezeigt ist, lässt ein Gehäuse 12 erkennen, welches ein Fach 13 zur Aufnahme eines Energiespeichers 14 aufweist. Bei dem Energiespeicher 14 handelt es sich z.B. um einen Lithium-Ionen-Akkumulator oder um einen anderen elektrochemischen Energiespeicher.

Das Fach 13 ist mit einem Deckel 15 verschlossen. Der Deckel 15 weist einen kegelstumpfförmigen Vorsprung 4 auf, der sich nach oben verjüngt und der unten, innenseitig einen entsprechend geformten kegelstumpfförmigen Hohlraum aufweist. In diesem Hohlraum befindet sich vorzugsweise die sekundärseitige Anordnung 3 von Empfangs-Spulen, z.B. Spulen aus einer Vielzahl von Kupferdrahtwindungen oder Litzenkabelwindungen. Die sekundärseitige Anordnung 3 ist an einem für die Erfindung modifizierten Exemplar des Energiespeichers 14 befestigt. Daher kann ein konventioneller Energiespeicher, der in der Regel quaderförmig ist, gegen einen solchen Energiespeicher 14 ausgewechselt werden, wobei optional außerdem noch der üblicherweise ebene Batteriefachdeckel durch den in Fig. 1 dargestellten Deckel 15 ausgewechselt wird.

Außerdem weist der Energiespeicher 14 die üblichen elektrischen Kontakte 1 zum elektrischen Kontaktieren entsprechender Kontakte des Mobiltelefons auf. Weiterhin ist in den Block des Energiespeichers 14 eine elektrische Ladeschaltung 2 integriert, die es ermöglicht, die von der sekundärseitigen Empfangs-Spulen Anordnung 3 aufgrund der empfangenen elektromagnetischen Wellen durch Induktion erzeugte elektrische Energie in den eigentlichen Energiespeicher, z.B. den elektrochemischen Energiespeicher, zu laden. Die Ladeschaltung weist insbesondere die weiteren elektrischen Bauteile der Resonanz-Schaltkreise und die Gleichrichter auf.

Fig. 2 zeigt ebenfalls einen vertikalen Schnitt, wobei jedoch der in Fig. 1 dargestellte Teil des Mobiltelefons 11 anders orientiert ist. Der kegelstumpfförmige Vorsprung 4 des Deckels 15 und die sekundärseitige Antenne 3 sind mit ihrer Rotationsachse nach unten ausgerichtet. Sie ragen in eine entsprechende kegelstumpfförmige Aussparung 17 einer Anordnung 5 zum Ankoppeln des Mobiltelefons an Einrichtungen des Kraftfahrzeugs hinein. Weitere Mittel, um insbesondere die Funkantenne des Mobiltelefons 11 an Einrichtungen (z.B. Freisprecheinrichtung, Außenantenne des Kraftfahrzeugs) anzukoppeln, sind in den Figuren nicht dargestellt.

Fig. 2 zeigt noch unmittelbar unterhalb der Aussparung 17 eine primärseitige Antenne 6 bzw. Sendespule zur Erzeugung der elektromagnetischen Wellen und damit des magnetischen Wechselfeldes, die von der sekundärseitigen Antenne 3 zu empfangen sind. Die primärseitige Antenne 6 ist vorzugsweise durch eine Vielzahl von Windungen eines elektrischen Leiters realisiert, wobei die Rotationsachse der Windungen mit der Rotationsachse der kegelstumpfförmigen Aussparung 17 übereinstimmt.

In der Draufsicht von Fig. 3 ist das Mobiltelefon 11 in einer beliebigen Drehposition um die Rotationsachse 18 der sekundärseitigen Antenne 3 dargestellt. Dabei befindet sich die primärseitige Antenne 3 in der in Fig. 2 dargestellten Position innerhalb der Aussparung 17. Obwohl die sekundärseitige Antenne 3 in der Draufsicht nicht zu erkennen wäre, ist sie in Fig. 3 dargestellt, um das Ausführungsbeispiel der Erfindung zu erläutern. Das Mobiltelefon 11 könnte jede andere Drehstellung um die Rotationsachse 18 einnehmen, wobei jedoch die sekundärseitige Antenne 3 in jedem Fall innerhalb der Aussparung 17 oder unmittelbar oberhalb der Aussparung 17 positioniert ist und dabei die Rotationsachsen des Vorsprungs 4 des Deckels 15 und der Aussparung 17 übereinstimmen.

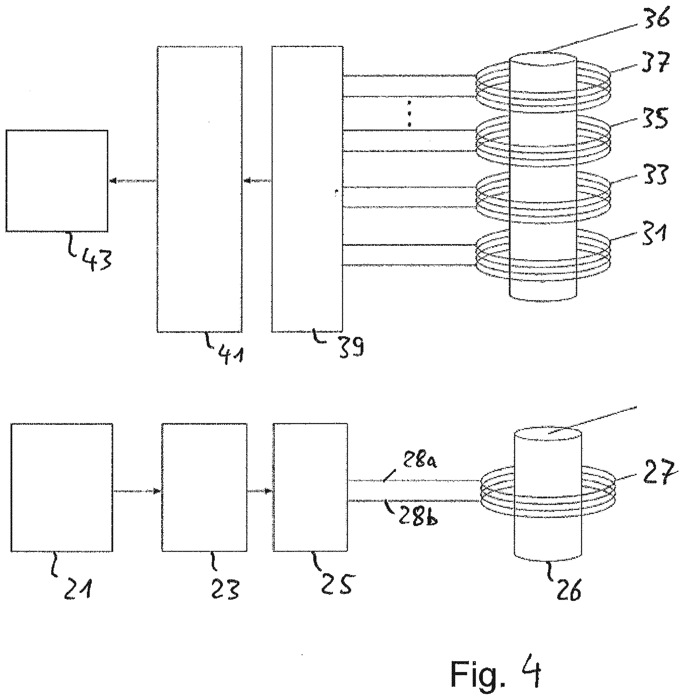

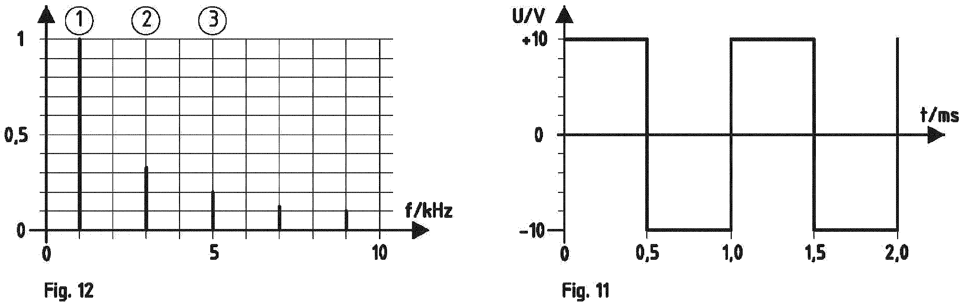

Fig. 4 zeigt im unteren Teil eine Sende-Anordnung mit einer Energieversorgungseinrichtung 21, einer Steuerung 23, einer Schaltungsanordnung 25 und einer mit der Schaltungsanordnung 25 elektrisch verbundenen Sende-Spule 27, wobei die Sende-Spule 27 in dem hier dargestellten Ausführungsbeispiel um ein Flussführungsteil 26 gewickelt ist. Beim Betrieb der sendeseitigen Anordnung wird Energie von der Energieversorgungseinrichtung 21 gesteuert durch die Steuerung 23 der Sende-Spule 27 zugeführt, wobei die Steuerung 23 das Ein- und Ausschalten eines Schalters (z. B. eines Halbleiterschalters wie IGBT) steuert, sodass z. B. der in Fig. 11 dargestellte zeitliche Verlauf der elektrischen Spannung U an den elektrischen Anschlüssen 28a, 28b der Sende-Spule 27 anliegt und daher ein im Wesentlichen rechteckförmiger Verlauf der magnetischen Feldstärke eines magnetischen Wechselfeldes erzeugt wird. Generell, nicht nur beschränkt auf das hier beschriebene Ausführungsbeispiel wird an den elektrischen Anschlüssen der Sende-Spule vorzugsweise ein rechteckförmiger Spannungsverlauf mit einer Frequenz von einigen 10 kHz bis wenigen 100 kHz erzeugt, z. B. im Frequenzbereich von 50 kHz bis 150 kHz.

Das magnetische Wechselfeld wird von einer Mehrzahl von Empfangs-Spulen 31, 33, 35, 37 empfangen, die durch Induktion eine entsprechende Wechselspannung erzeugen. Die Empfangs-Spulen 31, 33, 35, 37 sind mit einer Kombinationsschaltung 39 zum Kombinieren der verschiedenen induzierten Wechselspannungen verbunden, welche wiederum ausgangsseitig mit einem Leistungsempfänger 41 (z. B. einem Kabel zum Führen des resultierenden Gesamt-Ladestroms und/oder einer Ladestrom-Steuerung) verbunden ist. Der Leistungsempfänger 41 ist wiederum mit der Last 43, z. B. dem Energiespeicher eines mobilen Gerätes, verbunden.

Beim Betrieb der Empfangs-Anordnung empfangen die Empfangs-Spulen 31, 33, 35, 37 aufgrund des gemeinsamen Flussführungsteils 36, das sich durch die Innenbereiche der Empfangs-Spulen 31, 33, 35, 37 hindurch erstreckt, die Magnetfeldlinien eines homogenen Bereichs des magnetischen Wechselfeldes. Die Kombinationsschaltung 39 enthält jedoch für jede Empfangs-Spule 31, 33, 35, 37 individuell angepasste elektrische Bauteile, sodass Resonanz-Schaltkreise mit unterschiedlichen Resonanzfrequenzen entstehen, dabei ist vorzugsweise zumindest die Grundfrequenz des rechteckförmigen magnetischen Wechselfeldes und ebenfalls vorzugsweise zumindest die Frequenz der zweiten Oberwelle (d. h. die dreifache Grundfrequenz) in der Menge der realisierten Resonanzfrequenzen enthalten.

Wie die drei Punkte im oberen rechten Bereich der Fig. 4 andeuten, ist die Anordnung auch hinsichtlich der Anzahl der vorhandenen Empfangs-Spulen und dadurch realisierten Resonanz-Schaltkreise schematisch zu verstehen. Erfindungsgemäß sind zumindest zwei Empfangs-Spulen vorhanden. Im Fall von vier Empfangs-Spulen sind vorzugsweise die Resonanzfrequenzen realisiert, die der Grundfrequenz, der zweiten, der vierten und der sechsten Oberwelle entsprechen.

Fig. 12 zeigt, relativ bezogen auf den Energiegehalt der Grundwelle des rechteckförmigen magnetischen Wechselfeldes, den Energiegehalt der zweiten, vierten, sechsten und achten Oberwelle. Ohne Beschränkung der Erfindung darauf ist die Frequenz der Grundwelle z. B. 1 kHz. Bevorzugter Maßen liegt die Frequenz der Grundwelle jedoch in der Praxis in der Größenordnung von 100 kHz. Im Beispiel der Fig. 12 beträgt die Frequenz der zweiten Oberwelle folglicher Weise 3 kHz, die Frequenz der vierten Oberwelle 5 kHz, die Frequenz der sechsten Oberwelle 7 kHz und die Frequenz der achten Oberwelle 9 kHz. Die Energieanteile der Oberwellen sind geringer als der Energiegehalt der Grundwelle und betragen z. B. bei der zweiten Oberwelle etwa 33 % des Energiegehaltes der Grundwelle. Die Energiegehalte der höheren Oberwellen nehmen weiter mit zunehmender Frequenz ab. Wie oben durch die Ziffern 1, 2, 3 jeweils in einem Kreis dargestellt, ist in einer entsprechenden Empfangs-Ladeschaltung z. B. für die Grundwelle, die zweite Oberwelle und die vierte Oberwelle jeweils ein Resonanzkreis als Empfangskreis realisiert, der die entsprechende Frequenz als Resonanzfrequenz besitzt.

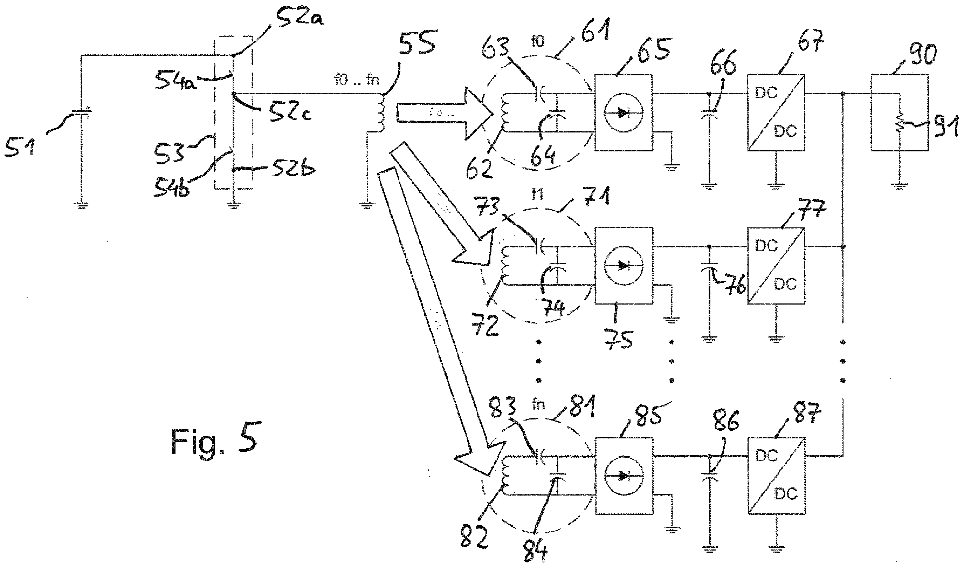

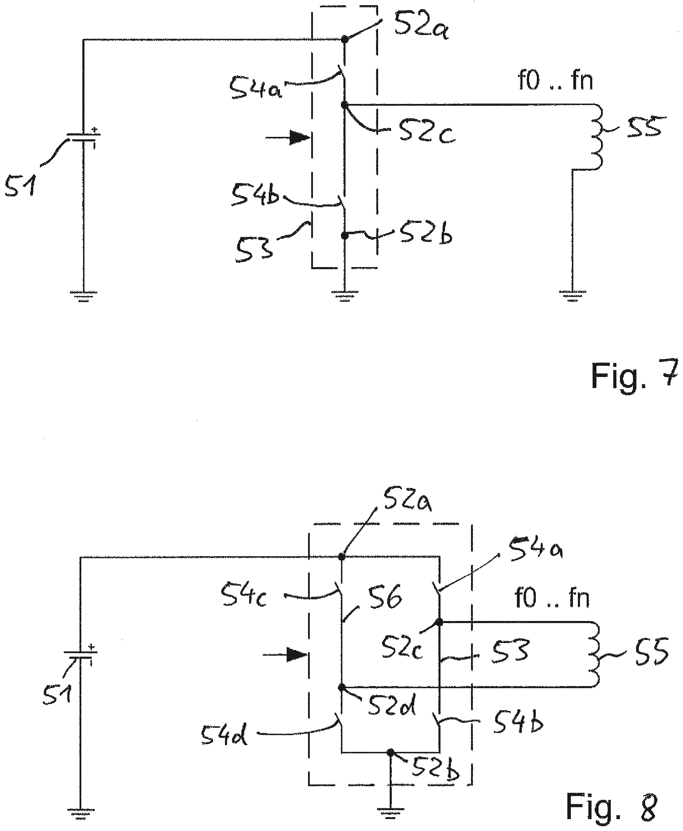

Die in Fig. 5 im linken Figurenteil gezeigte Sende-Schaltungsanordnung weist eine Spannungsquelle 51 auf, deren eines Potenzial z. B. mit Massepotenzial verbunden ist. Das andere Potenzial der Spannungsquelle 51 ist mit einem ersten Anschluss 52a einer Schalterbrücke 53 verbunden, die zwei in Reihe zueinander geschaltete Schalter 54a, 54b aufweist. Der entgegengesetzte Anschluss 52b der Schalterbrücke 53 ist z. B. wiederum mit Massepotenzial verbunden. Ein weiterer Anschluss 52c der Schalterbrücke 53, der zwischen den Schaltern 54a, 54b liegt, ist mit einem ersten Anschluss der Sende-Spule 55 verbunden. Der andere Anschluss der Sende-Spule 55 ist beispielsweise wiederum mit Massepotenzial verbunden. Statt Massepotenzial kann jeweils eine Verbindung zu einem anderen Referenzpotenzial hergestellt sein. Ferner können Modifikationen der Sende-Schaltungsanordnung vorgenommen werden, wie beispielsweise noch anhand von Fig. 8 erläutert wird. Bei den Schaltern 54a, 54b handelt es sich um steuerbare Schalter, d. h. auf Veranlassung der Steuerung (nicht gezeigt in Fig. 5) werden die Schalter 54a, 54b ein- und ausgeschaltet.

Die Sende-Schaltungsanordnung gemäß Fig. 5, die vergrößert auch in Fig. 7 dargestellt ist, wird in der Art eines Wechselrichters betrieben, d. h. die Schalter 54a, 54b befinden sich gleichzeitig weder im eingeschalteten noch im ausgeschalteten Zustand, wenn man von kurzen, vernachlässigbar kleinen Zeiträumen absieht, die während des Umschaltens der Schalter 54 existieren.

Es ist somit jeweils einer der Schalter 54 eingeschaltet und einer der Schalter 54 ausgeschaltet. Ist z. B. der obere Schalter 54a eingeschaltet, liegt das positive (in Fig. 5 oben liegende) Potenzial der Spannungsquelle 51 an dem oberen Anschluss der Sende-Spule 55 an. Ist dagegen der untere Schalter 54b eingeschaltet, liegt am oben dargestellten Anschluss der Sende-Spule 55 das Referenzpotenzial an.

Die empfangsseitige Ladeschaltung in Fig. 5 weist eine Mehrzahl von Resonanz-Schaltkreisen 61, 71, 81 auf, wobei durch Reihen von Punkten angedeutet ist, dass die Anzahl der Resonanz-Schaltkreise und daran angeschlossenen Einrichtungen bei den verschiedenen möglichen Ausgestaltungen variieren kann. Im Ausführungsbeispiel weist jeder der Resonanz-Schaltkreise 61, 71, 81 eine Empfangs-Spule 62, 72, 82 auf, zu der eine erste Kapazität 64, 74, 84 parallel geschaltet ist. Weiterhin ist zwischen jeweils einem Anschluss der Empfangs-Spule 62, 72, 82 und einem Anschluss der parallel geschalteten ersten Kapazität 64, 74, 84 eine zweite Kapazität 63, 73, 83 vorgesehen. Die Impedanzen der Empfangs-Spule 62, 72, 82 und der Kapazitäten 63, 64; 73, 74; 83, 84 sind derart gewählt, dass jeder der Resonanz-Schaltkreise 61, 71, 81 eine vorgegebene ResonanzFrequenz f0, f1, fn aufweist. Ferner ist in Fig. 5 oberhalb der Sende-Spule 55 mit "f0 .. fn" angedeutet, dass das von der Sende-Spule 55 erzeugte magnetische Wechselfeld Grundwelle und Oberwellen entsprechend diesen Frequenzen aufweist. Selbstverständlich muss auf der Empfangsseite nicht für jede dieser Frequenzen der Oberwellen ein Resonanz-Schaltkreis vorhanden sein, der die entsprechende Resonanzfrequenz aufweist. Jede der Kapazitäten kann z. B. durch ein oder mehrere Kondensatoren realisiert werden.

An die Resonanz-Schaltkreise 61, 71, 81 auf der Empfangsseite ist jeweils ein Gleichrichter 65, 75, 85 mit seiner Wechselspannungsseite angeschlossen und zwar zweipolig an die entgegengesetzten Anschlüsse der ersten Kapazität 64, 74, 84. Die Gleichspannungsseite des Gleichrichters 65, 75, 85 ist jeweils mit einem Pol an Masse bzw. Bezugspotenzial und mit dem anderen Pol an einen DC/DC-Konverter (d. h. einen Gleichspannungswandler) angeschlossen. Zur Glättung der Gleichspannung an der Ausgangsseite des Gleichrichters 65, 75, 85 ist die Anschlussverbindung zwischen dem Gleichrichter und dem DC/DC-Wandler 67, 77, 87 über eine dritte Kapazität 66, 76, 86 mit Bezugspotenzial bzw. Masse verbunden.

Die DC/DC-Konverter wandeln die jeweilige Gleichspannung an ihrer Eingangsseite, welche von dem Gleichrichter 65, 75, 85 erzeugt wird, in eine vorgegebene Gleichspannung um, wobei die vorgegebene Gleichspannung an den Ausgangsseiten aller DC/DC-Konverter 67, 77, 87 gleich groß ist. Der Laststrom, welcher von der vorgegebenen Gleichspannung an der Ausgangsseite der DC/DC-Konverter getrieben wird, setzt sich dann aus der Summe der Gleichströme zusammen, die auf der Induktion in den verschiedenen Resonanz-Schaltkreisen 61, 71, 81 beruhen. Anders ausgedrückt stellt jeder der DC/DC-Konverter an seiner Ausgangsseite eine elektrische Leistung zur Verfügung, die der empfangenen und in dem jeweiligen Resonanz-Schaltkreis 61, 71, 81 umgewandelten Leistung entspricht, abzüglich der Gleichrichtungs- und Konvertierungsverluste der Gleichrichter und DC/DC-Konverter. Wenn von einer vorgegebenen Gleichspannung an der jeweiligen Ausgangsseite der DC/DC-Konverter die Rede ist, schließt dies den Fall mit ein, dass sich die vorgegebene Gleichspannung im Laufe der Zeit ändern kann. Z. B. ist es möglich, dass eine Energiespeicher-Ladesteuerung die DC/DC-Konverter bezüglich der ausgangsseitigen Gleichspannung steuert.

Rechts oben in Fig. 5 ist eine Einrichtung 90 dargestellt, die eine Last 91 enthält, welche von der Schaltungsanordnung mit elektrischem Strom versorgt wird. Bei der Last 91 handelt es sich insbesondere um einen Energiespeicher, z. B. einen elektro-chemischen Energiespeicher zur Versorgung eines elektrischen Geräts. Es kann sich bei der Last 91 aber auch um die Kombination des elektrischen Geräts mit dem Energiespeicher handeln, d. h. das elektrische Gerät kann seinen Strom während des Betriebes zumindest teilweise unmittelbar aus der Schaltungsanordnung mit den Resonanz-Schaltkreisen 61, 71, 81 beziehen.

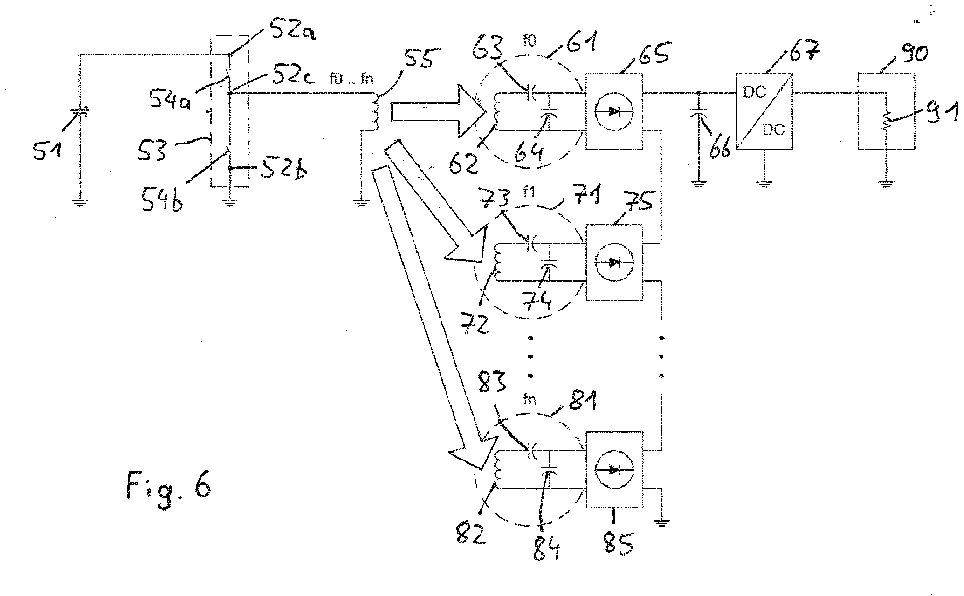

Fig. 6 zeigt eine gegenüber Fig. 5 modifizierte empfangsseitige Schaltungsanordnung. Gleiche Elemente und Einrichtungen in Fig. 5 und Fig. 6 sind mit denselben Bezugszeichen bezeichnet. Im Folgenden wird lediglich auf die Unterschiede zwischen empfangsseitigen Schaltungsanordnung in Fig. 5 und Fig. 6 eingegangen.

Die Gleichrichter 65, 75, 85 sind gemäß Fig. 6 nicht parallel, sondern in Reihe geschaltet. Dies bedeutet, dass lediglich einer der Gleichrichter, nämlich Gleichrichter 85, mit einem Pol an das Bezugspotenzial angeschlossen ist. Die Spannungen an den Gleichspannungsseiten der Gleichrichter 65, 75, 85 addieren sich daher während des Betriebes.

Folglich ist lediglich ein einziger Gleichrichter, nämlich Gleichrichter 65, mit einem Pol an einen DC/DC-Konverter 67 angeschlossen, wobei die Anschlussverbindung zur Glättung der Gleichspannung wiederum über eine dritte Kapazität 66 mit dem Bezugspotenzial verbunden ist. Wie im Fall der Fig. 5 ist die Ausgangsseite des DC/DC-Konverters mit der Einrichtung 90 und damit mit der Last 91 verbunden.

Fig. 7 zeigt in vergrößerter Darstellung die Schaltungsanordnung auf der Sendeseite der Anordnungen in Fig. 5 und Fig. 6. Eine Alternative stellt Fig. 8 dar. Wiederum sind gleiche Elemente und Einrichtungen mit denselben Bezugszeichen bezeichnet. Im Folgenden wird auf die Unterschiede zu der Anordnung in Fig. 7 eingegangen.

Zwischen die Anschlüsse 52a, 52b ist parallel zu der Schalterbrücke 53 eine zweite Schalterbrücke 56 geschaltet, die ebenfalls zwei in Reihe geschaltete steuerbare Schalter 54c, 54d aufweist. Ein Anschluss 52d zwischen den beiden Schaltern 54c, 54d ist mit dem zweiten Anschluss der Sende-Spule 55 verbunden, der in der Anordnung in der Fig. 7 mit dem Bezugspotenzial verbunden ist. In an sich bekannter Weise eines Vollbrücken-Wechselrichters wird durch entsprechendes Steuern der Schaltzeitpunkte der Schalter 54 an die Sende-Spule 55 alternierend die volle Spannung der Gleichspannungsquelle 51 angelegt (wenn die Schalter 54a und 54d geschlossen, d. h. eingeschaltet sind, und die Schalter 54c, 54b geöffnet, d. h. ausgeschaltet sind) und die volle umgekehrte Spannung der Gleichspannungsquelle 51 angelegt (wenn die Schalter 54c, 54b geschlossen und die Schalter 54a, 54d geöffnet sind). Die Spannungsamplitude der Wechselspannung, welche an die Sende-Spule 55 angelegt wird, ist folglich doppelt so groß wie im Fall der Fig. 7.

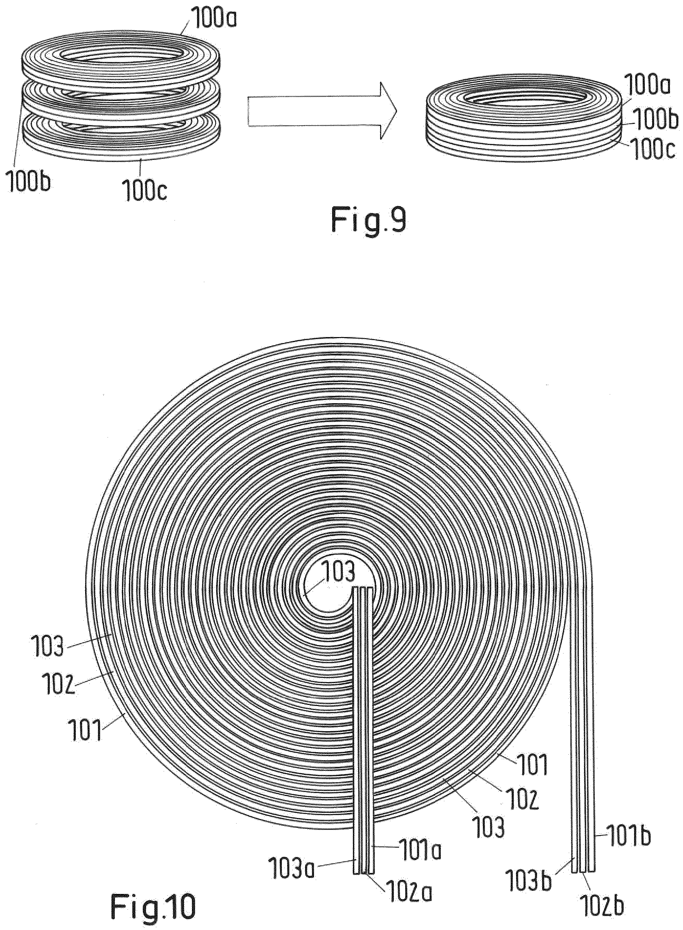

Die in Fig. 9 dargestellte Spulenanordnung weist drei übereinander gestapelte Empfangs-Spulen 100a, 100b, 100c auf. Der linke Figurenteil zeigt, dass es sich bei den Empfangs-Spulen 100a, 100b, 100c um separate, elektrisch voneinander getrennte Spulen handelt. Beispielsweise können die drei Spulen wie anhand von Fig. 5 und Fig. 6 beschrieben, jeweils Teil eines Resonanz-Schaltkreises sein.

Eine andere Möglichkeit der Ausgestaltung einer Anordnung von drei Empfangs-Spulen zeigt Fig. 10. Die elektrischen Leitungen der drei Spulen 101, 102, 103 sind nebeneinander in einer gemeinsamen Wicklungsebene zu einer gemeinsamen Wicklung gewickelt. Erste Anschlüsse 101a, 102a, 103a der Spulen führen vom Außenbereich der Wicklung in das Innere der Wicklung. Im weiteren Verlauf der Wicklung führen die elektrischen Leitungen der Spulen 101, 102, 103 spiralförmig und parallel zueinander nach außen, wo sich die zweiten Anschlüsse 101b, 102b, 103b befinden.

Bei einer möglichen Variante (nicht dargestellt) sind die ersten Anschlüsse 101a, 102a, 103a weggelassen und ist in einer über der Figurenebene oder unterhalb der Figurenebene Fig. 10 angeordnete zweite Wicklung vorgesehen. Die elektrischen Leitungen, die die beiden Wicklungen bilden, sind im Inneren der Wicklungen miteinander verbunden, sodass die erste Spule, die zweite Spule und die dritte Spule jeweils durch die beiden Wicklungen gebildet sind. Wie auch bei dem Ausführungsbeispiel der Fig. 10 sind die drei Spulen elektrisch voneinander getrennt.

## Patentansprüche

1. Ladeschaltung für einen Energiespeicher (91) eines portablen elektrischen Geräts, aufweisend einen ersten Resonanz-Schaltkreis (61), mit
- einer ersten Empfangs-Spule (62) zum Empfangen eines magnetischen Wechselfeldes, das in der ersten Empfangs-Spule (62) eine elektrische Spannung induziert, und
- zumindest einem weiteren elektrischen Bauteil (63, 64), welches mit zumindest einem Anschluss der ersten Empfangs-Spule (62) verbunden ist,
wobei die erste Empfangs-Spule (62) und das zumindest eine weitere elektrische Bauteil (63, 64) mit ihren Impedanzen eine Resonanzfrequenz (f0) des ersten Resonanz-Schaltkreises (61) festlegen,
wobei die Ladeschaltung
zumindest einen zweiten Resonanz-Schaltkreis (71, 81) aufweist, mit
- einer zweiten Empfangs-Spule (72, 82) zum Empfangen eines magnetischen Wechselfeldes, das in der zweiten Empfangs-Spule (72, 82) eine elektrische Spannung induziert, und
- zumindest einem weiteren elektrischen Bauteil (73, 74), welches mit zumindest einem Anschluss der zweiten Empfangs-Spule (72, 82) verbunden ist,
wobei die zweite Empfangs-Spule (72, 82) und das zumindest eine weitere elektrische Bauteil (73, 74) mit ihren Impedanzen eine Resonanzfrequenz (f1, fn) des zweiten Resonanz-Schaltkreises (71, 81) festlegen,
wobei die Resonanzfrequenz des zweiten Resonanz-Schaltkreises (71, 81) ein ganzzahliges Vielfaches der Resonanzfrequenz des ersten Resonanz-Schaltkreises (61) beträgt,
**dadurch gekennzeichnet, dass**
die Empfangs-Spulen (62, 72, 82) der Resonanz-Schaltkreise (61, 71, 81) derart angeordnet sind, dass sie bei Betrieb der Ladeschaltung von denselben Magnetfeldlinien des magnetischen Wechselfeldes durchsetzt sind.

2. Ladeschaltung nach Anspruch 1, mit zumindest der ersten Empfangs-Spule (62) und der zweiten Empfangs-Spule (72, 82), wobei zumindest zwei der Empfangs-Spulen (100a, 100b, 100c; 101, 102, 103) jeweils zumindest eine Wicklung einer elektrischen Leitung aufweisen, wobei die elektrischen Leitungen der zumindest zwei Empfangs-Spulen parallel zueinander verlaufen und von einem gemeinsamen Träger getragen werden.

3. Ladeschaltung nach Anspruch 2, wobei zumindest zwei der Empfangs-Spulen (100a, 100b, 100c; 101, 102, 103) jeweils zumindest eine Wicklung einer elektrischen Leitung aufweisen, wobei die elektrische Leitung zumindest einer der Empfangs-Spulen (100a, 100b, 100c; 101, 102, 103) im gesamten Verlauf der Windungen ihrer Wicklung parallel zu der elektrischen Leitung der anderen Empfangs-Spule oder zumindest einer der anderen Empfangs-Spulen (100a, 100b, 100c; 101, 102, 103) verläuft.

4. Ladeschaltung nach Anspruch 2 oder 3, wobei die elektrischen Leitungen von zumindest zwei der Empfangs-Spulen (101, 102, 103) eine gemeinsame spiralförmige Wicklung bilden, wobei die elektrischen Leitungen nebeneinander in einer Wicklungsebene der spiralförmigen Wicklung verlaufen.

5. Ladeschaltung nach Anspruch 4, wobei die elektrischen Leitungen zwei spiralförmige Wicklungen gemäß Anspruch 4 bilden und wobei die im Inneren der beiden spiralförmigen Wicklungen angeordneten Abschnitte der elektrischen Leitungen miteinander verbunden sind, sodass eine Serienschaltung der beiden spiralförmigen Wicklungen an den Außenseiten der spiralförmigen Wicklungen elektrisch an weitere Elemente des jeweiligen Resonanz-Schaltkreises angeschlossen sind.

6. Portables elektrisches Gerät (11), wobei das Gerät (11) die Ladeschaltung (2) nach einem der vorhergehenden Ansprüche und einen Energiespeicher (14) aufweist, wobei der Energiespeicher (14) elektrisch mit der Ladeschaltung (2) verbunden ist, sodass bei Empfang eines magnetischen Wechselfeldes durch die Empfangs-Spulen (62, 72, 82) die in den Empfangs-Spulen (62, 72, 82) induzierte elektrische Spannung einen Ladestrom erzeugt, der den Energiespeicher (91) lädt.

7. Anordnung zum Laden eines Energiespeichers (91) eines portablen elektrischen Geräts, aufweisend:
• die Ladeschaltung (61 - 91) oder das portable elektrische Gerät nach einem der vorhergehenden Ansprüche,
• eine Erzeugungsschaltung (51 - 56) zum Erzeugen des magnetischen Wechselfeldes.

8. Verfahren zum Laden eines Energiespeichers (91) eines portablen elektrischen Geräts, aufweisend Folgendes:
- Empfangen eines magnetischen Wechselfeldes und Induzieren einer elektrischen Spannung durch eine erste Empfangs-Spule (62), wobei eine Resonanzfrequenz (f0) beim Induzieren der elektrischen Spannung durch die Impedanzen der ersten Empfangs-Spule (62) und zumindest eines weiteren elektrischen Bauteils (63, 64), die gemeinsam einen ersten Resonanz-Schaltkreises (61) bilden, festgelegt wird,
- Empfangen desselben magnetischen Wechselfeldes und Induzieren einer elektrischen Spannung durch eine zweite Empfangs-Spule (72, 82), wobei eine Resonanzfrequenz (f1, fn) beim Induzieren der elektrischen Spannung durch die Impedanzen der zweiten Empfangs-Spule (72, 82) und zumindest eines weiteren elektrischen Bauteils (73, 74), die gemeinsam einen zweiten Resonanz-Schaltkreises (71, 81) bilden, festgelegt wird,
wobei die Resonanzfrequenz des zweiten Resonanz-Schaltkreises (71, 81) auf ein ganzzahliges Vielfaches der Resonanzfrequenz des ersten Resonanz-Schaltkreises (61) festgelegt wird,
**dadurch gekennzeichnet, dass**
die Empfangs-Spulen (62, 72, 82) der Resonanz-Schaltkreise (61, 71, 81) derart angeordnet verwendet werden, dass sie bei Betrieb der Ladeschaltung von denselben Magnetfeldlinien des magnetischen Wechselfeldes durchsetzt sind.

9. Verfahren nach Anspruch 8, wobei von den induzierten elektrischen Spannungen der ersten (62) und der zweiten (72, 82) Empfangs-Spule getriebene elektrische Ströme jeweils über einen an den ersten (61) bzw. zweiten (71, 81) Resonanz-Schaltkreis angeschlossenen Gleichrichter (65, 75, 85), wobei die Gleichrichter (65, 75, 85) in Reihe und/oder parallel zueinander geschaltet sind, dem Energiespeicher (91) zugeführt werden.

10. Verfahren zum Herstellen einer Ladeschaltung für einen Energiespeicher (91) eines portablen elektrischen Geräts, mit folgenden Schritten:
- Bilden eines ersten Resonanz-Schaltkreises (61), mit einer ersten Empfangs-Spule (62) zum Empfangen eines magnetischen Wechselfeldes, das in der ersten Empfangs-Spule (62) eine elektrische Spannung induziert, und mit zumindest einem weiteren elektrischen Bauteil (63, 64), welches mit zumindest einem Anschluss der ersten Empfangs-Spule (62) verbunden wird, wobei durch Festlegen der Impedanzen der ersten Empfangs-Spule (62) und des zumindest einen weiteren elektrischen Bauteils (63, 64) eine Resonanzfrequenz (f0) des ersten Resonanz-Schaltkreises (61) festgelegt wird,
- Bilden eines zweiten Resonanz-Schaltkreises (71, 81), mit einer zweiten Empfangs-Spule (72, 82) zum Empfangen eines magnetischen Wechselfeldes, das in der zweiten Empfangs-Spule (72, 82) eine elektrische Spannung induziert, und mit zumindest einem weiteren elektrischen Bauteil (73, 74), welches mit zumindest einem Anschluss der zweiten Empfangs-Spule (72, 82) verbunden wird, wobei durch Festlegen der Impedanzen der zweiten Empfangs-Spule (72, 82) und des zumindest einen weiteren elektrischen Bauteils (73, 74) eine Resonanzfrequenz (f1, fn) des zweiten Resonanz-Schaltkreises (71, 81) festgelegt wird,
wobei die Resonanzfrequenz des zweiten Resonanz-Schaltkreises (71, 81) auf ein ganzzahliges Vielfaches der Resonanzfrequenz des ersten Resonanz-Schaltkreises (61) festgelegt wird,
**dadurch gekennzeichnet, dass**
die Empfangs-Spulen (62, 72, 82) der Resonanz-Schaltkreise (61, 71, 81) derart angeordnet werden, dass sie bei Betrieb der Ladeschaltung von denselben Magnetfeldlinien des magnetischen Wechselfeldes durchsetzt sind.

## Claims

1. A charging circuit for an energy storage (91) of a portable electrical device, comprising a first resonance switching circuit (61), with
- a first receiver coil (62) for receiving an alternating magnetic field which induces an electrical voltage in the first receiver coil (62), and
- at least one further electrical component (63, 64), which is connected to at least one terminal of the first receiver coil (62),
wherein the first receiver coil (62) and the at least one further electrical component (63, 64) with their impedances determine a resonance frequency (f0) of the first resonance switching circuit (61),
wherein the charging circuit
comprises at least one second resonance switching circuit (71, 81), with
- a second receiver coil (72, 82) for receiving an alternating magnetic field, which induces an electrical voltage in the second receiver coil (72, 82), and
- at least one further electrical component (73, 74), which is connected to at least one terminal of the second receiver coil (72, 82),
wherein the second receiver coil (72, 82) and the at least one further electrical component (73, 74) with their impedances determine a resonance frequency (f1, fn) of the second resonance switching circuit (71, 81),
wherein the resonance frequency of the second resonance switching circuit (71, 81) is an integer multiple of the resonance frequency of the first resonance switching circuit (61),
**characterised in that**
the receiver coils (62, 72, 82) of the resonance switching circuits (61, 71, 81) are arranged in such a way that, during operation of the charging circuit, they are permeated by the same magnetic field lines of the alternating magnetic field.

2. The charging circuit according to claim 1, with at least the first receiver coil (62) and the second receiver coil (72, 82), wherein at least two of the receiver coils (100a, 100b, 100c; 101, 102, 103) each comprise at least one winding of an electrical line, wherein the electrical lines of the at least two receiver coils run parallel to one another and are supported by a common carrier.

3. The charging circuit according to claim 2, wherein at least two of the receiver coils (100a, 100b, 100c; 101, 102, 103) each comprise at least one winding of an electrical line, wherein the electrical line of at least one of the receiver coils (100a, 100b, 100c; 101, 102, 103) over the entire course of the turns of its winding, runs parallel to the electrical line of the other receiver coil or at least one of the other receiver coils (100a, 100b, 100c; 101, 102, 103).

4. The charging circuit according to claim 2 or 3, wherein the electrical lines of at least two of the receiver coils (101, 102, 103) form a common spiral-shaped winding, wherein the electrical lines run next to one another in a winding plane of the spiral-shaped winding.

5. The charging circuit according to claim 4, wherein the electrical lines form two spiral-shaped windings according to claim 4, and wherein the portions of the electrical lines arranged within the two spiral-shaped windings are connected to one another such that a series circuit of the two spiral-shaped windings at the outsides of the spiral-shaped windings are electrically connected to further elements of the respective resonance switching circuit.

6. A portable electrical device (11), wherein the device (11) comprises the charging circuit (2) according to any one of the preceding claims and an energy storage (14), wherein the energy storage (14) is electrically connected to the charging circuit (2), such that, as the receiver coils (62, 72, 82) receive an alternating magnetic field, the electrical voltage induced in the receiver coils (62, 72, 82) generates a charging current that charges the energy storage (91).

7. An assembly for charging an energy storage (91) of a portable electrical device, comprising:
• the charging circuit (61-91) or the portable electrical device according to any one of the preceding claims,
• a generation circuit (51-56) for generating the alternating magnetic field.

8. A method for charging an energy storage (91) of a portable electrical device, comprising the following:
- receiving an alternating magnetic field and inducing an electrical voltage through a first receiver coil (62), wherein a resonance frequency (f0) is determined during the induction of the electrical voltage through the impedances of the first receiver coil (62) and at least one further electrical component (63, 64), which together form a first resonance switching circuit (61),
- receiving the same alternating magnetic field and inducing an electrical voltage through a second receiver coil (72, 82), wherein a resonance frequency (f1, fn) is determined during the induction of the electrical voltage through the impedances of the second receiver coil (72, 82) and at least one further electrical component (73, 74), which together form a second resonance switching circuit (71, 81),
wherein the resonance frequency of the second resonance circuit (71, 81) is determined to an integer multiple of the resonance frequency of the first resonance switching circuit (61), **characterised in that**
the receiver coils (62, 72, 82) of the resonance switching circuit (61, 71, 81) are used disposed in such a way that during operation of the charging circuit they are permeated by the same magnetic field lines of the alternating magnetic field.

9. The method according to claim 8, wherein, electrical currents which are driven by the induced electrical voltages of the first (62) and the second (72, 82) receiver coil are fed to the energy storage (91) via a rectifier (65, 75, 85) connected to the first (61) or respectively second (71, 81) resonance circuit, wherein the rectifiers (65, 75, 85) are connected in series and/or parallel to one another.

10. A method for producing a charging circuit for an energy storage (91) of a portable electrical device, comprising the following steps:
- forming a first resonance switching circuit (61), with a first receiver coil (62) for receiving an alternating magnetic field which induces an electrical voltage in the first receiver coil (62), and with at least one further electrical component (63, 64) which is connected to at least one terminal of the first receiver coil (62), wherein by determining the impedances of the first receiver coil (62) and of the at least one further electrical component (63, 64) a resonance frequency (f0) of the first resonance switching circuit (61) is determined,
- forming a second resonance switching circuit (71, 81) with a second receiver coil (72, 82) for receiving an alternating magnetic field which induces an electrical voltage in the second receiver coil (72, 82), and with at least one further electrical component (73, 74) which is connected to at least one terminal of the second receiver coil (72, 82), wherein by determining the impedances of the second receiver coil (72, 82) and of the at least one further electrical component (73, 74) a resonance frequency (f1, fn) of the second resonance switching circuit (71, 81) is determined,
wherein the resonance frequency of the second resonance switching circuit (71, 81) is determined to an integer multiple of the resonance frequency of the first resonance switching circuit (61), **characterised in that**
the receiver coils (62, 72, 82) of the resonance switching circuits (61, 71, 81) are disposed in such a way that during operation of the charging circuit they are permeated by the same magnetic field lines of the alternating magnetic field.

## Revendications

1. Commutation de charge pour un accumulateur d'énergie (91) d'un appareil électrique portable, comprenant un premier circuit de résonance (61), avec
- une première bobine de réception (62) pour la réception d'un champ alternatif magnétique qui induit une tension électrique dans la première bobine de réception (62), et
- au moins un autre composant électrique (63, 64) qui est relié à au moins une borne de la première bobine de réception (62),
dans laquelle la première bobine de réception (62) et au moins un autre composant électrique (63, 64) établissent avec leurs impédances une fréquence de résonance (f0) du premier circuit de résonance (61),
dans laquelle la commutation de charge
présente au moins un second circuit de résonance (71, 81), avec
- une seconde bobine de réception (72, 82) pour la réception d'un champ alternatif magnétique qui induit une tension électrique dans la seconde bobine de réception (72, 82), et
- au moins un autre composant électrique (73, 74) qui est relié à au moins une borne de la seconde bobine de réception (72, 82),
dans laquelle la seconde bobine de réception (72, 82) et au moins un autre composant électrique (73, 74) établissent avec leurs impédances une fréquence de résonance (f1, fn) du second circuit de résonance (71, 81),
dans laquelle la fréquence de résonance du second circuit de résonance (71, 81) s'élève à un multiple entier de la fréquence de résonance du premier circuit de résonance (61),
**caractérisée en ce que**
les bobines de réception (62, 72, 82) des circuits de résonance (61, 71, 81) sont agencées de telle sorte qu'elles sont traversées lors du fonctionnement de la commutation de charge par les mêmes lignes de force du champ alternatif magnétique.

2. Commutation de charge selon la revendication 1, avec au moins la première bobine de réception (62) et la seconde bobine de réception (72, 82), dans laquelle au moins deux des bobines de réception (100a, 100b, 100c ; 101, 102, 103) présentent respectivement au moins un enroulement d'une ligne électrique, dans laquelle les lignes électriques des au moins deux bobines de réception sont parallèles l'une à l'autre et sont supportées par un support commun.

3. Commutation de charge selon la revendication 2, dans laquelle au moins deux des bobines de réception (100a, 100b, 100c ; 101, 102, 103) comprenant respectivement au moins un enroulement d'une ligne électrique, dans laquelle la ligne électrique d'au moins une des bobines de réception (100a, 100b, 100c ; 101, 102, 103), sur tout le parcours des spires de son enroulement, est parallèle à la ligne électrique de l'autre bobine de réception ou d'au moins une des autres bobines de réception (100a, 100b, 100c ; 101, 102, 103).

4. Commutation de charge selon la revendication 2 ou 3, dans laquelle les lignes électriques d'au moins deux des bobines de réception (101, 102, 103) forment un enroulement commun en spirale, dans laquelle les lignes électriques sont les unes à côté des autres dans un plan d'enroulement de l'enroulement en spirale.

5. Commutation de charge selon la revendication 4, dans laquelle les lignes électriques forment deux enroulements en spirale selon la revendication 4 et dans laquelle les portions des lignes électriques agencées à l'intérieur des deux enroulements en spirale sont reliées l'une à l'autre, de telle sorte qu'un montage en série des deux enroulements en spirale au niveau des faces extérieures des enroulements en spirale est branché électriquement sur d'autres éléments du circuit de résonance respectif.

6. Appareil électrique portable (11), dans lequel l'appareil (11) présente la commutation de charge (2) selon l'une des revendications précédentes et un accumulateur d'énergie (14), dans lequel l'accumulateur d'énergie (14) est relié électriquement à la commutation de charge (2) de telle sorte que, lors de la réception d'un champ alternatif magnétique par les bobines de réception (62, 72, 82), la tension électrique induite dans les bobines de réception (62, 72, 82) génère un courant de charge qui charge l'accumulateur d'énergie (91).

7. Dispositif pour la charge d'un accumulateur d'énergie (91) d'un appareil électrique portable, présentant :
- la commutation de charge (61-91) ou l'appareil électrique portable selon l'une des revendications précédentes,
- un circuit de génération (51-56) pour la génération du champ alternatif magnétique.

8. Procédé de charge d'un accumulateur d'énergie (91) d'un appareil électrique portable, comprenant ce qui suit:
- la réception d'un champ alternatif magnétique et l'induction d'une tension électrique par une première bobine de réception (62), dans lequel une fréquence de résonance (f0), lors de l'induction de la tension électrique, est établie par les impédances de la première bobine de réception (62) et d'au moins un autre composant électrique (63, 64), qui forment conjointement un premier circuit de résonance (61),
- la réception du même champ alternatif magnétique et l'induction d'une tension électrique par une seconde bobine de réception (72, 82), dans lequel une fréquence de résonance (f1, fn), lors de l'induction de la tension électrique, est établie par les impédances de la seconde bobine de réception (72, 82) et d'au moins un autre composant électrique (73, 74), qui forment conjointement un second circuit de résonance (71, 81),
dans lequel la fréquence de résonance du second circuit de résonance (71, 81) est établie à un multiple entier de la fréquence de résonance du premier circuit de résonance (61),
**caractérisé en ce que**
les bobines de réception (62, 72, 82) des circuits de résonance (61, 71, 81) sont disposées de telle sorte qu'elles sont traversées lors du fonctionnement de la commutation de charge par les mêmes lignes de force du champ alternatif magnétique.

9. Procédé selon la revendication 8, dans lequel des courants électriques excités par les tensions électriques induites de la première (62) et de la seconde (72, 82) bobine de réception sont amenés respectivement à l'accumulateur d'énergie (91) via un redresseur (65, 75, 85) branché sur le premier (61) ou le second (71, 81) circuit de résonance, dans lequel les redresseurs (65, 75, 85) sont montés en série et/ou en parallèle les uns avec les autres.

10. Procédé de réalisation d'une commutation de charge pour un accumulateur d'énergie (91) d'un appareil électrique portable, comprenant les étapes suivantes :
- formation d'un premier circuit de résonance (61), avec une première bobine de réception (62) pour la réception d'un champ alternatif magnétique qui induit dans la première bobine de réception (62) une tension électrique, et avec au moins un autre composant électrique (63, 64) qui est relié à au moins une borne de la première bobine de réception (62), dans lequel une fréquence de résonance (f0) du premier circuit de résonance (61) est établie par l'établissement des impédances de la première bobine de réception (62) et d'au moins un autre composant électrique (63, 64),
- formation d'un second circuit de résonance (71, 81), avec une seconde bobine de réception (72, 82) pour la réception d'un champ alternatif magnétique qui induit une tension électrique dans la seconde bobine de réception (72, 82), et avec au moins un autre composant électrique (73, 74) qui est relié à au moins une borne de la seconde bobine de réception (72, 82), dans lequel une fréquence de résonance (f1, fn) du second circuit de résonance (71, 81) est établie par l'établissement des impédances de la seconde bobine de réception (72, 82) et d'au moins un autre composant électrique (73, 74),
dans lequel la fréquence de résonance du second circuit de résonance (71, 81) est établie à un multiple entier de la fréquence de résonance du premier circuit de résonance (61),
**caractérisé en ce que**
les bobines de réception (62, 72, 82) des circuits de résonance (61, 71, 81) sont agencées de telle sorte qu'elles sont traversées lors du fonctionnement de la commutation de charge par les mêmes lignes de force du champ alternatif magnétique.
